# FASCICULE DE BREVET EUROPEEN

(11) **EP 0 444 434 B1**
(45) Date de publication et mention de la délivrance du brevet: **14.09.1994**
(21) Numéro de dépôt: 91101458.7
(22) Date de dépôt: 04.02.1991
(51) Int. Cl.: G01M 3/20

(54) **Détecteur de fuite à hélium fonctionnant à contre-courant, portable pour tester une enceinte possédant son propre groupe de pompage**
Nach dem Gegenstromprinzip arbeitendes tragbarer Helium-Lecksuchgerät zum Prüfen von Anlagen, die eine eigene Pumpengruppe zur Verfügung haben
Portable counter-flow helium leak detector for testing a vessel provided with its own pumping group

(30) Priorité: 09.02.1990 FR 9001534
(43) Date de publication de la demande: 04.09.1991
(73) Titulaire: ALCATEL CIT, 75008 Paris (FR)
(72) Inventeur: Baret, Gilles, F-74000 Annecy (FR); Gevaud, Roland, F-74370 Pringy (FR)
(74) Mandataire: Weinmiller, Jürgen

(56) Documents cités:
- EP-A- 0 283 543
- DE-C- 3 308 555
- GB-A- 2 133 552
- GB-A- 2 142 150
- GB-A- 2 190 204
- US-A- 4 399 690
- TECHNISCHES MESSEN, vol. 54, no. 3, 1987, pages 89-94, Munich, DE; C.J. KÜNDIG: "Neue Wege beim Bau und der Anwendung von Helium-Lecksuchern"
- TECHNICA, septembre 1982, page 867, Zürich, CH; "Tragbarer Massenspektrometer-Lecksucher"

## Description

La présente invention concerne un détecteur de fuite portable à hélium, fonctionnant en contre-courant ne comprenant qu'une seule pompe, ladite pompe étant une pompe à vide secondaire comportant une entrée et une sortie, un analyseur de gaz étant branché à l'entrée de ladite pompe, ladite sortie étant reliée, par l'intermédiaire d'une vanne d'entrée, à un orifice de raccordement à une installation à tester, ladite installation étant sous vide ou pouvant être raccordée à des moyens de pompage primaire, le détecteur comportant en outre des circuits électroniques d'alimentation et de commande, des moyens de mise sous tension et des moyens d'affichage, une première jauge de mesure de pression située entre ladite vanne d'entrée et ledit orifice de raccordement, une manette de commande de mise en marche du détecteur, lesdits circuits de commande assurant l'ouverture de ladite vanne d'entrée et la mise en route de ladite pompe à vide secondaire si, le détecteur étant sous tension, ladite manette de commande a été actionnée et lorsque la pression mesurée par ladite première jauge est descendue au-dessous d'une valeur déterminée, la mise en route de l'analyseur de gaz étant effectuée automatiquement lorsque ladite pompe à vide secondaire a atteint sa vitesse nominale, une seconde jauge de mesure de pression étant en outre située au niveau de ladite pompe à vide.

Le document Technisches Messen, volume 54, n^{o} 3, 1987, pages 89-94, décrit un détecteur de ce type. De même, les documents EP-A-0 283 543, GB-A-2 133 552 et DE-C-3 308 555 décrivent des détecteurs de fuites avec différents systèmes de commande.

La présente invention a pour but de proposer un détecteur du type défini ci-dessus, d'un maniement extrêmement simple et sûr, excluant toute possibilité de fausse manoeuvre et donc pouvant être utilisé même par des personnes non qualifiées et pouvant être maintenu en état de fonctionnement, et donc être immédiatement opérationnel, pendant de très longues périodes entre deux essais consécutifs.

L'invention a ainsi pour objet un détecteur tel que défini ci-dessus, caractérisé en ce que des moyens de commande sont prévus de façon à ce que, le détecteur étant sous tension, la mise en position de repos de ladite manette de commande provoque la fermeture de ladite vanne d'entrée si celle-ci est ouverte, tout en maintenant l'alimentation de ladite pompe si la pression mesurée par ladite seconde jauge de mesure est inférieure à une valeur de consigne, l'analyseur de gaz étant également maintenu en état de fonctionnement si ladite pompe est à sa vitesse nominale, celle-ci étant une pompe mécanique rotative.

Selon une autre caractéristique, l'ensemble du détecteur est contenu dans une unique valise munie de moyens manuels de transport.

On va maintenant donner la description d'un exemple de mise en oeuvre de l'invention en se référant au dessin annexé dans lequel :
La figure 1 est un schéma fonctionnel du circuit de vide du détecteur de fuite selon l'invention.
Les figures 2 et 3 montrent schématiquement selon deux vues, l'implantation des éléments mécaniques et électriques du détecteur de l'invention, dans une valise.
La figure 4 représente la platine de contrôle du détecteur.
La figure 5 est un schéma de la logique de commande.
La figure 6 est un diagramme logique fonctionnel des différentes opérations.

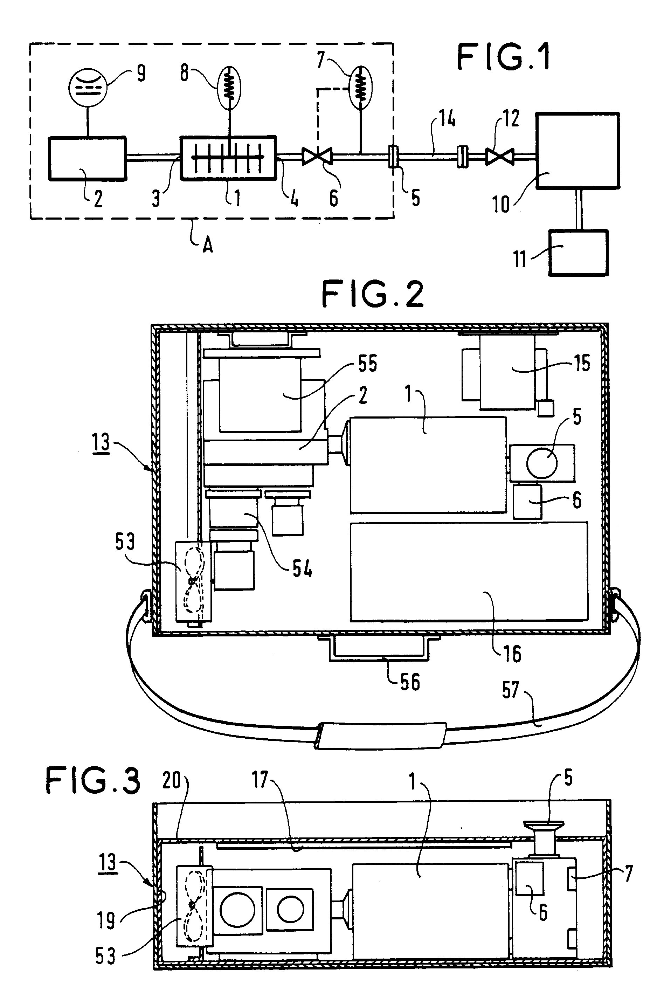

En se référant à la figure 1, on voit le schéma de vide du détecteur selon l'invention.

Il comprend une unique pompe 1 qui est une pompe secondaire turbomoléculaire et un analyseur de gaz 2 relié à l'entrée 3 de la pompe. La sortie 4 de la pompe est reliée à un orifice de raccordement formant bride 5 par l'intermédiaire d'une vanne d'entrée 6.

La vanne d'entrée 6 est une vanne électromagnétique commandée par l'intermédiaire d'une première jauge 7 de mesure de pression disposée entre la vanne d'entrée et la bride 5. Il s'agit par exemple d'une jauge thermique type Pirani.

Le détecteur comporte encore une seconde jauge 8 de mesure de pression située au niveau de la pompe à vide 1 et du même type que la première jauge 7, et une troisième jauge 9, du type jauge triode, au niveau de l'analyseur de gaz 2.

Le détecteur est destiné à être relié à une enceinte à tester 10 qui est déjà sous vide ou bien qui peut être reliée à des moyens de pompages primaires 11. L'enceinte 10 possède une vanne de liaison 12. Le détecteur fonctionne selon le mode dit "à contre-courant".

L'ensemble des éléments du détecteur situé à l'intérieur du cadre A est logé dans une valise 13 représentée sur les figures 2 et 3 ; en revanche, les organes hors de ce cadre ne sont pas logés dans la valise : non seulement, bien entendu, l'enceinte à tester 10 mais aussi la vanne 12 et le groupe de pompage 11, sauf la canalisation de liaison amovible 14 qui peut trouver place dans la valise.

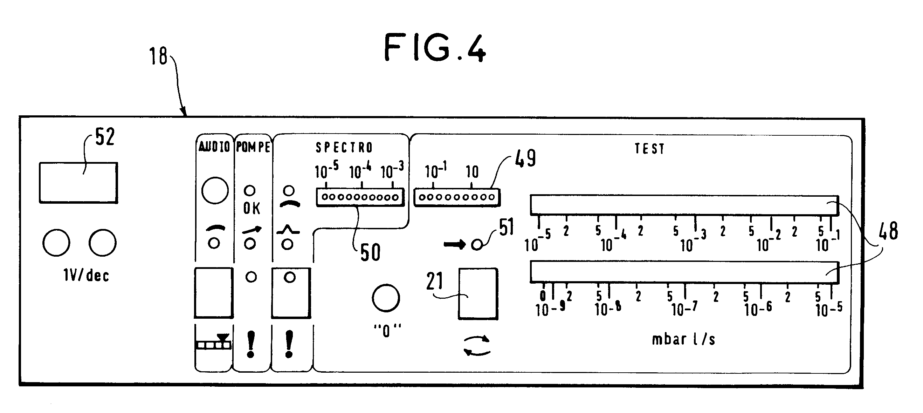

A l'intérieur de la valise sont en outre situés tous les accessoires nécessaires au fonctionnement du détecteur et notamment un transformateur d'alimentation 15, une carte de circuit imprimé 16 pour les circuits électroniques d'alimentation de la pompe 8, ainsi qu'une carte de circuit imprimé 17 pour les circuits électroniques de commande, d'automatisme et de signalisation et une platine 18 (figure 4) de contrôle comportant des cadrans d'affichage.

L'ensemble est fixé sur un berceau 19 en aluminium qui comporte une platine supérieure 20 qui inclut la platine de contrôle 18.

La platine de contrôle 18 comporte, outre des éléments de contrôle et d'affichage, une manette de commande 21 de mise en marche du détecteur. Le transformateur 15 comporte un cordon d'alimentation, non représenté, pour sa liaison au secteur assurant la mise sous tension du détecteur.

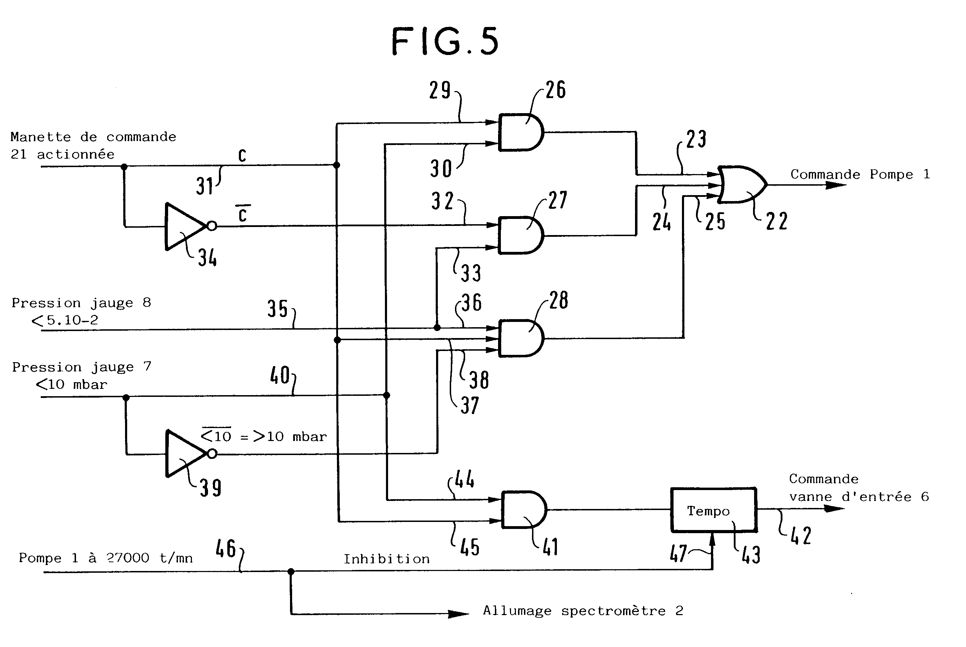

Les circuits électroniques de la carte de circuit imprimé 17 comportent entre autres un circuit logique de commande tel que celui représenté sur la figure 5.

Ce circuit comprend une porte "OU" 22 dont la sortie commande le démarrage de la pompe 1 et qui comporte trois entrées 23, 24 et 25 provenant respectivement de la sortie de trois portes "ET" 26, 27 et 28.

La porte "ET" 26 possède deux entrées 29 et 30. L'entrée 29 reçoit un signal, sur la ligne 31, lorsque la manette de commande 21 est actionnée et l'entrée 30 reçoit, par la ligne 40, un signal lorsque la pression, mesurée par la première jauge 7 est inférieure à une valeur déterminée, de 10 mbar dans le cas de l'exemple cité.

La porte "ET" 27 possède également deux entrées 32 et 33. L'entrée 32 est reliée à la ligne 31 par un inverseur 34 et donc reçoit un signal lorsque la manette de commande 21 est en position de repos, non actionnée. L'entrée 33 est reliée à une ligne 35 qui reçoit un signal lorsque la pression indiquée par la seconde jauge 8 est inférieure à une valeur de consigne, de 5.10⁻² mbar dans le cas de l'exemple.

Enfin, la porte "ET" 28 possède trois entrées 36, 37 et 38. L'entrée 36 est reliée à la ligne 35, l'entrée 37 à la ligne 31 et l'entrée 38 à la ligne 40 mais par l'intermédiaire d'un inverseur 39.

Le circuit logique comprend en outre une porte "ET" 41 dont la sortie 42 commande, par l'intermédiaire d'une temporisation 43, l'ouverture de la vanne d'entrée 6. Cette porte "ET" 41 possède deux entrées 44 et 45 ; l'entrée 44 étant reliée à la ligne 40 et l'entrée 45 à la ligne 31.

Ainsi, l'appareil étant mis sous tension, la pompe 1 démarre automatiquement et la vanne d'entrée 6 s'ouvre si la manette de commande 21 est actionnée et si la pression indiquée par la première jauge 7 descend au-dessous de la valeur déterminée de 10 mbar.

La mise en route de l'analyseur de gaz (le spectromètre de masse 2) est effectuée automatiquement dès que la pompe turbomoléculaire 1 atteint sa vitesse nominale, de 27000 tours/mn dans l'exemple, comme le figure la ligne 46 de la logique représentée figure 5.

La temporisation 43 comporte une entrée d'inhibition 47 qui est reliée à la ligne 46.

Comme on peut l'observer sur cette figure 5, le détecteur peut être conservé en état de marche, à condition qu'il soit toutefois sous tension, après avoir effectué un essai. En effet, si après un tel essai, on place en position de repos la manette de commande 21, la vanne d'entrée 6 se ferme puisque l'entrée 45 de la porte "ET" 41 n'est plus alimentée mais la pompe 1 est toujours alimentée car la porte "OU" 22 reste alors activée par son entrée 24 et en outre le spectromètre de masse 2 est toujours en état de marche car la pompe 1 fonctionne toujours à sa vitesse nominale.

Si l'on veut effectuer un nouveau test sur la même enceinte, il suffit d'actionner de nouveau la manette de commande 21 et si la pression dans la canalisation 14 s'est maintenue inférieure à 10 mbar la vanne 6 s'ouvre si non, elle s'ouvrira dès que cette pression sera atteinte, grâce à la pompe 11.

Si l'on veut effectuer un test sur une autre enceinte, on relie la canalisation 14 à cette autre enceinte, on met en route le système de pompage de l'enceinte et on actionne la manette de commande 21. Dès que la pression dans cette canalisation descendra au-dessous de 10 mbar la vanne d'entrée 6 s'ouvre et le détecteur peut contrôler l'étanchéité de l'enceinte.

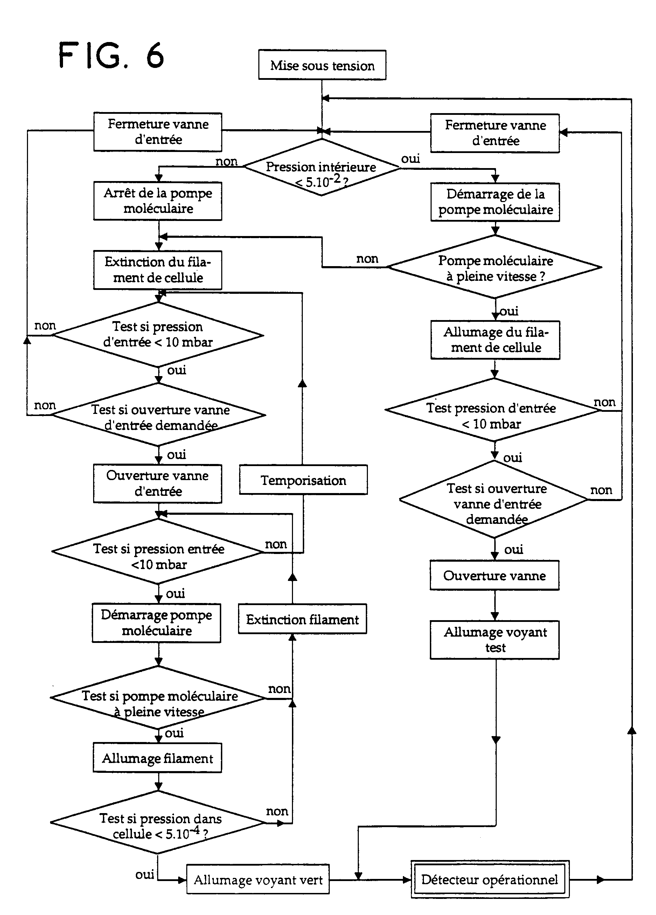

La figure 6 donne un diagramme logique fonctionnel complet des différentes étapes de fonctionnement de l'appareil.

Sur la platine de contrôle de la figure 4, on voit le cadran d'affichage (en deux parties) 48 de la fuite mesurée, le cadran d'affichage 49 de la pression d'entrée, mesurée par la jauge 7, celui, 50, de la pression du spectromètre 2 ; en 51 un indicateur lumineux de l'état de la vanne d'entrée 6 ; en 52 un compteur horaire de fonctionnement et diverses autres indications ou touches de réglage qui ne sont pas essentielles à l'invention.

La valise 13 comporte un ventilateur 53 pour la ventilation des circuits électroniques et de l'électrovanne 6. En 54, on voit le préamplificateur du spectromètre de masse et en 55 l'aimant. La valise comporte une poignée 56 et une sangle de transport 57.

Ainsi, le détecteur de l'invention inclus dans une valise présente de nombreux avantages : grâce à sa transportabilité, à son faible poids, de l'ordre de 18 kg, à sa robustesse, il accompagne le dépanneur dans ses déplacements quel que soit le mode de transport. Ceci est tout à fait nouveau : le dépanneur arrive sur le site avec son appareil.

En outre, aucun emballage n'est nécessaire, c'est la valise qui en tient lieu. Il n'y a plus d'attente en réception du détecteur chez le client, le dépanneur voyage et arrive sur le site avec son appareil.

Il n'y a aucune opérations préliminaires de mise en route : débridage de la pompe, vérification de niveau d'huile : le détecteur peut être raccordé immédiatement sur l'enceinte à contrôler.

Ainsi, grâce à ces avantages, ce détecteur peut remplir outre son rôle habituel de contrôle d'étanchéité, une fonction de dépannage d'urgence en cas de nécessité.

## Revendications

1. Détecteur de fuite portable à hélium, fonctionnant en contre-courant ne comprenant qu'une seule pompe (1), ladite pompe (1) étant une pompe à vide secondaire comportant une entrée (3) et une sortie (4), un analyseur de gaz (2) étant branché à l'entrée (3) de ladite pompe, ladite sortie (4) étant reliée, par l'intermédiaire d'une vanne d'entrée (6), à un orifice (5) de raccordement à une installation (10) à tester, ladite installation étant sous vide ou pouvant être raccordée à des moyens de pompage primaire (11), le détecteur comportant en outre des circuits électroniques d'alimentation et de commande (16, 17), des moyens de mise sous tension (15) et des moyens d'affichage (48, 49, 50), une première jauge (7) de mesure de pression située entre ladite vanne d'entrée (6) et ledit orifice de raccordement (5), une manette (21) de commande de mise en marche du détecteur, lesdits circuits de commande (17) assurant l'ouverture de ladite vanne d'entrée (6) et la mise en route de ladite pompe à vide secondaire (1) si, le détecteur étant sous tension, ladite manette de commande (21) a été actionnée et lorsque la pression mesurée par ladite première jauge (7) est descendue au-dessous d'une valeur déterminée, la mise en route de l'analyseur de gaz (2) étant effectuée automatiquement lorsque ladite pompe à vide secondaire (1) a atteint sa vitesse nominale, une seconde jauge (8) de mesure de pression étant en outre située au niveau de ladite pompe à vide (1), caractérisé en ce que des moyens de commande sont prévus de façon à ce que, le détecteur étant sous tension, la mise en position de repos de ladite manette de commande (21) provoque la fermeture de ladite vanne d'entrée (6) si celle-ci est ouverte, tout en maintenant l'alimentation de ladite pompe (1) si la pression mesurée par ladite seconde jauge (8) de mesure est inférieure à une valeur de consigne, l'analyseur de gaz (2) étant également maintenu en état de fonctionnement si ladite pompe (1) est à sa vitesse nominale, celle-ci étant une pompe mécanique rotative.

2. Détecteur de fuite selon la revendication 1, caractérisé en ce qu'il est contenu dans une unique valise (13) munie de moyens manuels de transport (56, 57).

## Claims

1. A portable counterflow helium leak detector having only one pump (1), said pump (1) being a secondary vacuum pump including an inlet (3) and an outlet (4), a gas analyzer (2) being connected to the inlet (3) of said pump, said outlet (4) being connected via an inlet valve (6) to a correction orifice (5) for connection to an installation (10) to be tested, said installation being evacuated or being capable of being connected to primary pumping means (11), the detector further including electronic power supply and control circuits (16, 17), power supply means (15), and display means (48, 49, 50), a first pressure gauge (7) situated between said inlet valve (6) and said connection orifice (5), an ON/OFF control switch (21) for controlling detector operation, said electronic control circuits (17) causing said inlet valve to open (6) and said secondary vacuum pump (1) to start whenever, the detector being powered, said control switch (21) is in the ON position and the pressure measured by said first gauge (7) is below a determined value, the gas analyzer (2) being automatically switched on when said secondary vacuum pump (1) reaches its nominal speed, a second pressure gauge (8) being further situated at said vacuum pump (1), the detector being characterized in that control means are provided such that, the detector being powered, putting said control switch (21) into the OFF position causes said inlet valve (6) to be closed if it was open, while continuing to run said pump (1) providing the pressure measured by said second pressure gauge (8) is below a reference value, the gas analyzer (2) likewise being maintained in operating condition providing the pump (1) is at its nominal speed, said pump being a mechanical rotary pump.

2. A leak detector according to claim 1, characterized in that the leak detector is contained in a single suitcase (13) provided with means (56, 57) for being carried by hand.

## Patentansprüche

1. Heliumleckdetektor nach dem Gegenstromprinzip, der nur eine Pumpe, nämlich eine Sekundärvakuumpumpe (1) mit einem Eingang (3) und einem Ausgang (4) verwendet, wobei ein Gasanalysator (2) an den Eingang (3) dieser Pumpe angeschlossen ist, während der Ausgang (4) über ein Eingangsventil (6) an einen Anschlußflansch (5) für eine Testanlage (10) angeschlossen ist, die unter Vakuum steht oder an Vorvakuumpumpmittel (11) angeschlossen werden kann, wobei der Detektor weiter elektronische Speise- und Steuerschaltungen (16, 17), Stromversorgungs- (15) und Anzeigemittel (48, 49 50), eine erste Druckmeßsonde (7) zwischen dem Eingangsventil (6) und dem Anschlußflansch (5) und einen Steuerknopf (21) zum Einschalten des Detektors aufweist, wobei die Steuerschaltungen (17) das Öffnen des Eingangsventils (6) und das Einschalten der Sekundärvakuumpumpe (1) bewirken, wenn der Detektor mit Spannung versorgt wird und der Steuerknopf (21) betätigt wurde und wenn der in der ersten Druckmeßsonde (7) gemessene Druck unter einen vorgegebenen Wert gefallen ist, während das Einschalten des Gasanalysators (2) automatisch erfolgt, wenn die Sekundärvakuumpumpe (1) ihre Nenngeschwindigkeit erreicht hat, wobei eine zweite Druckmeßsonde (8) außerdem in Höhe der Vakuumpumpe (1) angeordnet ist, dadurch gekennzeichnet, daß Steuermittel vorgesehen sind, die bei eingeschaltetem Detektor nach Umschaltung des Steuerknopfes (21) in die Ruhestellung das Eingangsventil (6) schließen, wenn es geöffnet war, und dabei die Stromversorgung der Pumpe (1) aufrechterhalten, wenn der an der zweiten Druckmeßsonde (8) gemessene Druck unter einem Sollwert liegt, wobei der Gasanalysator (2) auch in Betrieb gehalten wird, wenn die Pumpe (1), die eine mechanische drehende Pumpe ist, mit Nenngeschwindigkeit rotiert.

2. Leckdetektor nach Anspruch 1 dadurch gekennzeichnet, daß er in einem einzigen Koffer (13) untergebracht ist, der Mittel (56, 57) zum Tragen aufweist.
